(19) Europäisches Patentamt
European Patent Office
Office européen des brevets

(11) Veröffentlichungsnummer : **0 202 362**
**B1**

(12) **EUROPÄISCHE PATENTSCHRIFT**

(45) Veröffentlichungstag der Patentschrift :
26.04.89

(51) Int. Cl.⁴ : **B 25 G 3/18**, B 25 G 3/22,
**B 25 G 3/08**

(21) Anmeldenummer : **85115894.9**

(22) Anmeldetag : **13.12.85**

(54) Steckverbindung zur vorübergehenden Festlegung eines Gerätes an einem Stiel.

(30) Priorität : 20.05.85 ES 286841

(43) Veröffentlichungstag der Anmeldung :
26.11.86 Patentblatt 86/48

(45) Bekanntmachung des Hinweises auf die Patenterteilung : 26.04.89 Patentblatt 89/17

(84) Benannte Vertragsstaaten :
AT BE CH DE FR GB IT LI LU NL SE

(56) Entgegenhaltungen :
CH-A- 305 389
DE-A- 3 229 054
FR-A- 353 476
US-A- 3 145 406
US-A- 3 407 424

(73) Patentinhaber : Vileda GmbH
Müllheimertalstr. 19
D-6940 Weinheim (DE)

(72) Erfinder : Cambredò Perez, Antonio
Via Augusta, 261
E-08017 Barcelona (ES)

(74) Vertreter : Weissenfeld-Richters, Helga, Dr.
Höhnerweg 2
D-6940 Weinheim/Bergstrasse (DE)

## Beschreibung

Die Erfindung betrifft eine Steckverbindung zur vorübergehenden Festlegung eines Gerätes an einem Stiel, umfassend eine Tülle und einen Zapfen, die wackelsicher ineinander fügbar sind, wobei für die gegenseite Festlegung in zusammengefügtem Zustand eine mit einer Haltekralle versehene Federzunge des einen Teiles vorgesehen ist, die hinter einer Haltefläche des anderen Teiles einrastbar ist sowie eine Verdrehsicherung, die aus einer an der Stirnseite offenen Ausnehmung des einen Teiles besteht, die ohne nennenswertes Spiel in umfangrichtung auf einen radialen Vorsprung des anderen Teiles aufschiebbar ist.

Eine Steckverbindung der vorgenannten Art ist aus der CH-A-305 389 bekannt. Sie ist für die gegenseitige Verbindung zwischen einem Besen und dem zugehörigen Stiel bestimmt, und umfaßt eine große Anzahl von Einzelteilen, die zur Herstellung der gebrauchsfertigen Einheit in einem aufwendigen Montagevorgang zusammengeführt werden müssen. Der hieraus resultierende Aufwand ist erheblich und behindert die Verbreitung. Auch ist die Handhabung der bekannten Ausführung wenig befriedigend. Sie erfordert im Anschluß an das Einfügen des Zapfens in die Tülle die zusätzliche Betätigung von einer Schiebehülse. Diese gelangt dabei in eine in mechanischer Hinsicht nur wenig stabile Lage, woraus der zusätzliche Nachteil resultiert, daß sich bereits bei der normalen Benutzung des angesteckten Gerätes, beispielsweise eines Besens, ein unbeabsichtigtes Lösen der Verbindung ergeben kann. Des weiteren ist das Gewicht der vorbeschriebenen Steckverbindung wegen der kompakten Ausbildung der enthaltenen Einzelteile vergleichsweise hoch und steht einer Verwendung an leichten Geräten, beispielsweise an einem Mop, ebenfalls hindernd entgegen.

Der Erfindung liegt die Aufgabe zugrunde, eine einfach herzustellende und einfach zu handhabende Steckverbindung zu zeigen, die sich bei großer Stabilität und Funktionssicherheit durch ein besonders geringes Gewicht auszeichnet und die dadurch universell an beliebigen Geräten verwendbar ist.

Diese Aufgabe wird erfindungsgemäß bei einer Steckverbindung der eingangs genannten Art dadurch gelöst, daß die Federzunge am Bodenteil des Zapfens festgelegt ist, daß die Federzunge die Wandung der Tülle außenseitig in einem im wesentlichen gleichbleibend geringen Abstand umgreift, daß der Vorsprung durch eine Rippe gebildet wird, die sich parallel zu der Tülle erstreckt und daß die Federzunge und der Zapfen einerseits und die Rippe, die Tülle und das Bodenteil andererseits jeweils einstückig ausgebildet sind.

Die erfindungsgemäße Steckverbindung umfaßt lediglich zwei einstückig erzeugte Einzelteile, von denen das eine an dem Stiel und das andere an dem Gerät festgelegt ist, mit dem der Stiel vorübergehend zu verbinden ist. Die Herstellung der beiden Einzelteile ist äußerst einfach und kann unter Verwendung an sich bekannter Spritzgießverfahren aus thermoplastischen Werkstoffen erfolgen. Die Herstellkosten sind dementsprechend gering.

Beide Einzelteile umfassen in Stielrichtung zusammenfügbare Paßstücke, die sowohl mit einer Verdrehsicherung als auch mit einer Nockenverriegelung versehen sind. Die Verdrehsicherung verlangt beim Zusammenfügen der beiden Paßstücke vorausgehend zu der Nockenverriegelung in Eingriff, wodurch ein Zusammenfügen der beiden Einzelteile in unverdrehtem Zustand stets gesichert ist. Dabei ist es von hervorzuhebendem Vorteil, daß die Aktivierung der Verdrehsicherung einen spürbaren Kraftaufwand nicht erfordert.

Die Nockenverriegelung umfaßt wenigstens eine am Bodenteil des Zapfens festgelegte Federzunge, die den Zapfen sowohl in zusammengefügtem Zustand als auch in dem auseinandergenommenen Zustand der beiden Einzelteile in gleicher Weise zugeordnet ist. Die Federzunge ist dadurch ausschließlich während des Zusammenfügens bzw. Auseinandernehmens der beiden Einzelteile einer kurzzeitigen Deformierung unterworfen, wodurch die ursprüngliche Elastizität auch bei Verwendung von thermoplastischen Werkstoffen bei ihrer Herstellung langfristig erhalten bleibt. In zusammengefügtem Zustand sind der Basisteil der Federzunge und der vorspringende Teil der Tülle einander in gleicher Ebene zugewandt. Das ist in statischer Hinsicht ganz besonders günstig und auch nach längerem Gebrauch ist eine sich verstärkende Wackelneigung nicht zu befürchten.

Die Federzunge ist im vorspringenden Bereich mit einer Haltekralle versehen, die durch Ausübung einer ausreichend großen Kraft in Fügerichtung elastisch hinter der Haltefläche der Tülle einrastbar ist. Das Zusammenfügen der beiden Teile ist dadurch denkbar einfach und erfordert nicht die Betätigung von zusätzlichen Elementen. Auch das Auseinandernehmen der beiden Einzelteile ist entsprechend einfach. Es erfordert wegen der in Öffnungsrichtung spitzwinkeligen Zuordnung der Haltefläche und/oder der mit der Haltefläche in Eingriff gelangenden Fläche der Haltekralle ebenfalls nur die Aufwendung einer ausreichend großen Zugkraft an dem Stiel und führt zu einer leichten Lösung der Verbindung. Dennoch wird in zusammengefügtem Zustand der beiden Einzelteile eine völlig wackelsichere Verbindung erhalten, die dem belastungsmäßigen Anforderungsprofil üblicher Bodenbearbeitungsgeräte vollkommen genügt.

Die Zuordnung der Tülle bzw. des Zapfens zu dem Stiel bzw. dem Gerät ist an sich beliebig. Einer Ausführung, bei der die Tülle dem Gerät zugeordnet ist, wird jedoch aus statischen Gründen der Vorzug gegeben.

Im zusammengefügten Zustand umgreift die Federzunge die Wandung der Tülle außenseitig in einem im wesentlichen gleichbleibend geringen Abstand, der im wesentlichen dem Abstand entspricht, den die Innenseite der Tülle von dem Zapfen aufweist. Der Abstand ist so gering bemessen, daß unter Berücksichtigung der üblichen Herstellungstoleranzen und von gebrauchsbedingten Formveränderungen, beispielsweise von Werkstoffquellungen als Folge einer Benetzung mit Wasser, ein leichtes Zusammenfügen gerade noch gewährleistet ist. Die Tülle erfährt dadurch beim Auftreten von Winkelverlagerungen des angeschlossenen Gerätes eine mechanische Aussteifung einerseits durch die Federzunge und andererseits durch den Zapfen, was die Tragfähigkeit der Verbindung wesentlich erhöht. Der genannte Vorteil tritt insbesondere dann deutlich in Erscheinung, wenn die Federzunge und der Zapfen eine im wesentlichen übereinstimmende Erstreckung in axialer Richtung haben.

Eine besonders gute Verschleißsicherheit wird dann erhalten, wenn die Federzunge, der Zapfen und die Tülle wenigstens auf den einander zugewandten Seiten durch der Steckverbindung rotationssymmetrisch zugeordnete Flächen begrenzt sind. Die Flächen werden zweckmäßig zylindrisch ausgebildet, und lassen sich in diesem Falle besonders einfach erzeugen.

Die im zusammengefügten Zustand der beiden Einzelteile in eine stirnseitige Ausnehmung des Zapfens eingreifende Rippe der Tülle und das Bodenteil der Tülle sind zweckmäßig auf der dem Gerät zugewandten Seite einstückig verbunden. Durch das Vorhandensein der Rippe ergibt sich so eine zusätzliche Aussteifung der Tülle in mechanischer Hinsicht.

Die Rippe kann der Wandung der Tülle außen- oder innenseitig zugeordnet sein.

Im erstgenannten Falle ergibt sich der Vorteil einer besonders guten Aussteifung der Tülle in mechanischer Hinsicht, in letztgenanntem Falle der Vorteil einer verdeckten Anordnung bei glattflächiger Außenseite.

Die Gefahr einer Anlagerung von Schmutz während der normalen Benutzung des Gerätes wird dadurch wesentlich vermindert. Auch Ausführungen, bei denen die Tülle außen- und innenseitig mit Rippen versehen ist, sind denkbar. Sie vereinen in gewissem Maße die Vorteile beider Ausführungen in sich.

Die Tülle kann mit mehreren gleichmäßig auf dem umfang verteilten Rippen versehen sein und der Zapfen/ oder die Federzunge mit einer gleichgroßen Anzahl von gleichmäßig auf dem umfang verteilten Ausnehmungen. Neben einer hervorragenden Verdrehsicherung ergibt sich in diesem Falle der Vorteil einer mechanischen Stabilisierung der Tülle gegen Knickbelastungen, die aus verschiedenen Richtungen auftreffen. Bezogen auf das Gewicht der Steckverbindung wird eine besonders gute Stabilität erhalten.

Wenn die Tülle außenseitig mit mehreren gleichmäßig verteilten Rippen versehen ist, sollten die Rippen möglichst in den Zwischenräumen benachbarter Federzungen angeordnet werden und eine mit den Federzungen im wesentlichen übereinstimmende Erstreckung in radialer Richtung haben. Die Rippen ergänzen bei einer solchen Ausführung in zusammengefügtem Zustand der beiden Einzelteile die glatte Oberfläche der Federzungen in deren Zwischenräumen. Die Gefahr einer unerwünschten Anlagerung von Schmutz ist dadurch deutlich vermindert.

Die innerhalb der Nockenverriegelung der erfindungsgemäßen Steckverbindung mit der Haltekralle zusammenwirkende Haltefläche wird zweckmäßig durch die von der Mündung der Tülle abgewandte Seite einer Halterippe gebildet, wobei die Halterippe sich quer zu der Richtung der Tülle erstreckt. Eine entsprechende Ausführung hat den Vorteil, daß zum Einrasten der Nockenverriegelung nur eine sehr kurzfristige Deformierung der Federzunge erforderlich ist.

Des weiteren ergibt sich der Vorteil einer zusätzlichen Aussteifung der Wandung der Tülle durch die sich in Querrichtung erstreckende Halterippe.

Die Haltefläche und/oder die im zusammengefügten Zustand der Teile mit der Haltefläche in Eingriff gelangende Fläche der Haltekralle sind der Mündung der Tülle unter einem spitzen Winkel zugeordnet. Dieser schließt mit der Richtung des Stieles einen Winkel von maximal 75°, vorteilhaft einen solchen zwischen 35 und 60°. Die Stirnfläche der Federzunge ist bei einer entsprechenden Ausführung innenseitig entsprechend abgeschrägt. Sie vermag dadurch während des Zusammenfügens der beiden Einzelteile leicht über die Rippe hinwegzugleiten.

Im Sinne der vorstehenden Ausführungen ist es daher auch möglich, mehrere gleichmäßig auf dem umfang der Tülle verteilte Halterippen vorzusehen. Diese sind zweckmäßig in den Zwischenräumen von als Verdrehsicherung dienenden, außenseitigen Rippen der Tülle angeordnet, und können in Hinblick auf die Erzielung einer weiteren Verbesserung der mechanischen Widerstandskraft der Tülle in diese übergehend ausgebildet sein. Durch eine hohle Ausführung des Zapfens läßt sich ohne nennenswerte Beeinträchtigung der Stabilität eine weitere Verminderung des Gewichtes realisieren.

Die erfindungsgemäße Steckverbindung zeichnet sich bei einer einfachen Herstellbarkeit durch eine besonders gute Handhabbarkeit durch Stabilität aus. Sie ist daneben weitgehend unempfindlich gegen Verschleiß und von geringem Gewicht, was ihre universelle Verwendung bei der Festlegung eines Stiels an einem beliebigen Gerät erlaubt.

Der Gegenstand der vorliegenden Erfindung wird nachfolgend anhand der als Anlage beigefügten Zeichnung weiter erläutert. Es zeigen :

Figur 1 die beiden Einzelteile der erfindungsgemäßen Steckverbindung unmittelbar vor dem Zusammenfügen

Figur 2 das die Tülle aufweisende Einzelteil in der Draufsicht

Figur 3 das den Zapfen aufweisende Einzelteil in einer Ansicht von unten

Figur 4 das den Zapfen aufweisende Einzelteil in teilweise aufgeschnittener Darstellung Figur 5 die beiden Einzelteile in zusammengefügtem Zustand

Figur 6 die beiden zusammengefügten Einzelteile in quergeschnittener Darstellung

Figur 7 die beiden zusammengefügten Einzelteile in längsgeschnittener Darstellung.

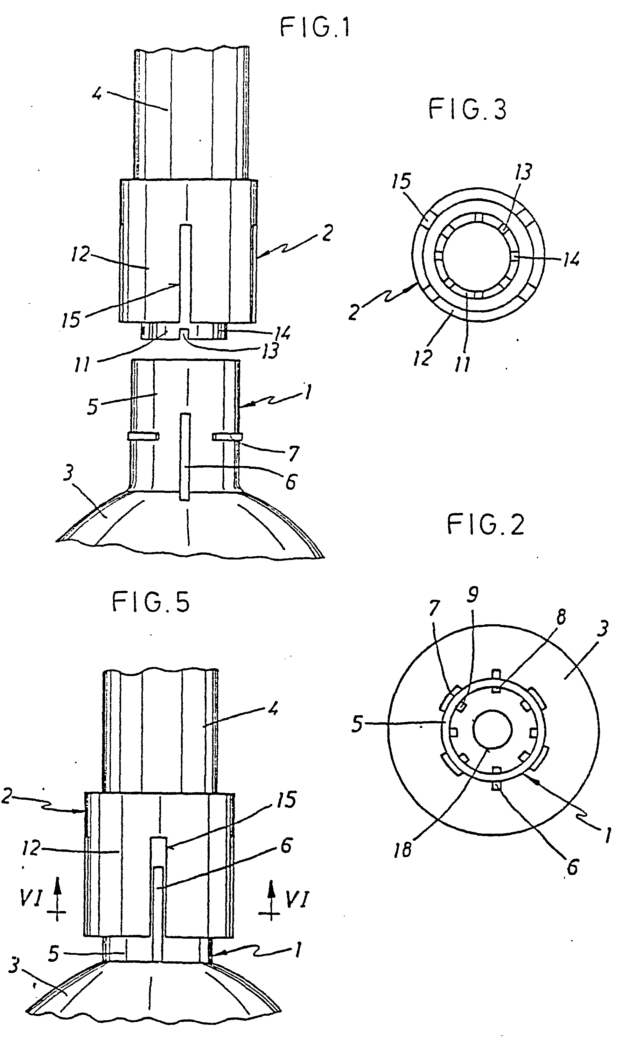

Die in Figur 1 wiedergegebenen Einzelteile 1,2 sind von rotationssymmetrischer Gestalt, welche lediglich an einigen Stellen unterbrochen ist durch Ausnehmungen bzw. Rippen.

Beide Einzelteile sind unabhängig voneinander erzeugt durch Anwendung des Spritzgußverfahrens. Sie bestehen beide aus irgendeinem der einschlägig zur Anwendung gelangenden Werkstoffe, vorzugsweise jedoch aus PVC oder Polypropylen.

Das die Tülle 5 aufweisende Einzelteile 1 ist unterseitig mit einem Bodenteil 3 versehen, welches zugleich einen Bestandteil des anschließenden Gerätes bilden kann, beispielsweise einen Teil der Fadenhaltevorrichtung eines Mops.

Die Tülle 5 ist hohlzylindrisch ausgebildet und außenseitig mit der sich in Längsrichtung erstreckenden Rippe 6 versehen, welche als Verdrehsicherung dient und zugleich mit der Tülle einstückig in das Basisteil 3 übergehend ausgebildet ist. Eine weitere Rippe ist auf der nicht sichtbaren Rückseite der Tülle 5 in gleicher Weise angebracht.

Des weiteren sind an der Außenseite der Tülle 2 sich quer zur Stielrichtung erstreckende Halterippen 7 sichtbar, die einen Bestandteil der später weiter erläuterten Nockenverriegelung bilden. Die Halterippen 7 sind ebenfalls einstückig mit der Tülle 5 ausgebildet.

Das Einzelteil 2 umfaßt den an dem Besenstiel 4 festgelegten Zapfen 11, der stirnseitig mit der in Stielrichtung geöffneten Ausnehmung 13 versehen ist. Letztere bildet einen Bestandteil der Verdrehsicherung, auf die später nochmals eingegangen wird.

Der Zapfen 11 ist außenseitig von gleichmäßig auf dem umfang verteilten Federzungen 12 umschlossen, die durch Ausnehmungen 15 in umfangsrichtung voneinander getrennt sind. Die Federzungen vermögen dadurch in ihrem vorspringenden Teil radial zu federn.

Figur 2 verdeutlicht die gegenseitige Zuordnung zwischen den als Verdrehsicherung dienenden Rippen 6, 8, 9, den Halterippen 7 und der Tülle 5 zu dem Basisteil 3. Es ist deutlich zu erkennen, daß im wesentlichen eine gleichmäßige Verteilung aller Rippen vorgenommen ist. Hierdurch wird eine gleichmäßige Aussteifung der Tülle in allen Richtungen erhalten. Das Basisteil 3 ist zusätzlich mit einer zentralen Bodenöffnung 18 versehen. Diese dient der Aufnahme eines nicht gezeigten, sekundären Befestigungsteiles des angeschlossenen Gerätes.

Figur 3 verdeutlicht die Ausbildung und gegenseitige Zuordnung des Zapfens 11 und der Federzunge 12. Es ist zu erkennen, daß der Zapfen mit einer zentralen Ausnehmung versehen ist, und daß zwischen den einzelnen Federzungen und in der Stirnfläche des Zapfens weitere gleichmäßig auf dem Umfang verteilte Ausnehmungen 13, 14, 15 vorgesehen sind. Diese umschließen die Rippen 6, 8, 9 des ersten Einzelteiles nach dem Einfügen des Zapfens 11 in die Tülle 5 in geringem Abstand in Umfangsrichtung, wodurch eine Relativverdrehung ausgeschlossen ist. Der zusammengefügte Zustand ist in Figur 5 in Vorderansicht gezeigt.

Das zweite Einzelteil 2 ist in Figur 4 in halbgeschnittener Darstellung wiedergegeben, um zu zeigen, daß die Federzungen 12 eine im wesentlichen parallele Erstreckung zu dem hohlzylindrischen Zapfen 11 haben. Sie sind im vorspringenden Bereich innenseitig mit einer sich quer zur Richtung des Stieles 4 erstreckenden Eintiefung versehen, um eine Haltekralle zu bilden. Des weiteren sind die Federzungen 12 stirnseitig mit der Einlaufschräge 17 versehen, um die Überwindung der Halterippen 7 beim axialen Einpressen des Zapfens 11 in die Tülle 1 zu ermöglichen.

Die Haltekralle schnappt anschließend hinter der Halterippe 7 ein, wodurch ergänzend zu der axialen Festlegung eine gute Sicherung gegen eine unerwünschte Loslösung des angeschlossenen Gerätes erzielt wird. Die stirnseitigen Ausnehmungen 13, 14 des Zapfens 11 sind von unterschiedlicher Tiefe, um eine unverdrehte Zuordnung zwischen dem Stiel und dem angeschlossenen Gerät zu gewährleisten. Eine entsprechende Ausbildung hat sich als zweckmäßig erwiesen, um zu erreichen, daß die am oberen Ende des Stiels 4 vorhandene, zeichnerisch nicht dargestellte Aufhängeöse dem angeschlossenen Gerät stets in gleicher Weise zugeordnet ist. Sowohl für die Handhabung als auch für die Aufbewahrung ergeben sich dadurch Vorteile.

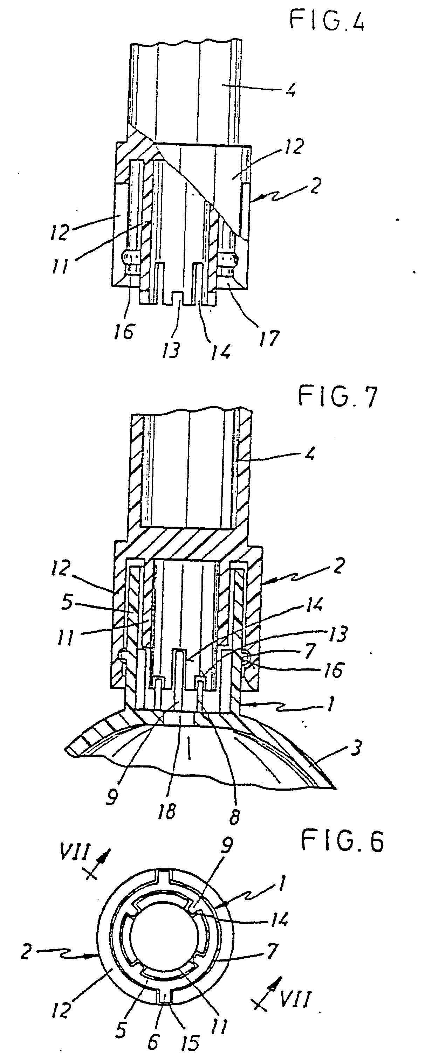

Figur 6 zeigt die beiden zusammengefügten Einzelteile 1, 2 in quergeschnittener Darstellung. Die Rippen 6 greifen in die Zwischenräume der Federzungen 12 ein und haben eine radiale Erstreckung, die derjenigen der Federzungen entspricht. Die Außenkontur der fertig montierten Einheit ist dadurch glattflächig, was unter hygienischen Gesichtspunkten von großem Vorteil ist.

Es ist des weiteren zu erkennen, daß die Hülse 5 innenseitig von dem Zapfen 11 und außenseitig von den Federzungen 12 durchgehend abgestützt wird. Sie erfährt dadurch eine erhebliche Aussteifung in mechanischer Hinsicht, welche eine weitere Aufwertung dadurch erfährt, daß die Rippen 6, 9, einstückig in das Bodenteil der Tülle 5 übergehend ausgebildet sind.

Die fertig montierte Einheit wird in Figur 7 in längsgeschnittener Darstellung wiedergegeben. Auch in diesem Falle ist zu erkennen, daß die Tülle 5 außen- und innenseitig in engem Abstand umschlossen wird, einerseits von den Federzungen 12 und andererseits von dem Zapfen 11.

Beide haben eine im wesentlichen übereinstimmende Erstreckung in radialer Richtung, wodurch sich die von ihnen ausgeübten Abstützkräfte gegenseitig ergänzen. Der Zapfen 11 ist innen hohl ausgebildet, wodurch Platz geschaffen wird für nicht dargestellte Verankerungshilfsmittel angeschlossener Geräte, die durch die Bodenöffnung 18 eindringen.

Bei einem Vergleich der Figuren 4 und 7 zeigt sich, daß die Federzungen 12 weder im zusammengefügten noch im auseinandergenommenen Zustand der beiden Einzelteile eine Deformierung erfahren. Auch unter Verwendung zum Kaltfließen neigender, thermoplastischer Werkstoffe läßt sich daher eine wackelsichere Verbindung zwischen den beiden Einzelteilen 1, 2 langfristig gewährleisten.

Die Halterippe 7 erstreckt sich quer zur Richtung des Stiels 4 und wird in axialer Richtung beiderseits durch sich senkrecht zur Richtung des Stiels 4 erstreckende Flächen begrenzt. Sie wird unterseitig von der Fläche 16 der Haltekralle untergriffen, welche mit der Erstreckung des Stiels einen Winkel von 55° einschließt. Die Ausübung einer Zugkraft auf den Stiel 4 bewirkt dadurch eine Entfernung des vorderen Endes der Federzungen 12 von der Außenseite der Tülle 11, bis die Haltekralle über die Halterippe 7 hinweggleitet. Die weitere Auseinanderbewegung kann ohne Kraftaufwand erfolgen.

Beim Zusammenfügen der beiden Einzelteile 1 und 2 wiederholt sich der Vorgang in umgekehrter Richtung. In diesem Falle gelangt die Einlaufschräge 17 an der oberen Begrenzungsfläche der Halterippe 7 zur Anlage und bewirkt bei Ausübung weiterer Druckkraft eine vorübergehende Entfernung des vorderen Endes der Federzunge 12 von der Außenseite des Zapfens 11. Der Vorgang wird durch das Einschnappen der Haltekralle hinter der Halterippe 7 beendet. Des weiteren wird in Figur 7 gezeigt, auf welche Weise die Rippen 8, 9 in die Ausnehmung 13, 14 des Zapfens eingreifen. Es ist deutlich zu erkennen, daß nach dem Zusammenfügen der beiden Einzelteile in Umfangsrichtung zwischen den Ausnehmungen und den Rippen nur ein geringes Spiel vorhanden ist. Die Verbindung erweist sich dadurch als äußerst drehstabil und wackelsicher.

**Patentansprüche**

1. Steckverbindung zur vorübergehenden Festlegung eines Gerätes an einem Stiel, umfassend eine Tülle (5) und einen Zapfen (11), die wackelsicher ineinander fügbar sind, wobei für die gegenseitige Festlegung in zusammengefügtem Zustand eine mit einer Haltekralle (16) versehene Federzunge (12) des einen Teiles vorgesehen ist, die hinter einer Halterippe (7) des anderen Teiles einrastbar ist sowie eine Verdrehsicherung, die aus einer an der Stirnseite offenen Ausnehmung (13, 14, 15) des einen Teiles besteht, die ohne nennenswertes Spiel in Umfangsrichtung auf einen radialen Vorsprung des anderen Teiles aufschiebbar ist, dadurch gekennzeichnet, daß die Federzunge (12) am Bodenteil des Zapfens (11) festgelegt ist, daß die Federzunge die Wandung der Tülle (5) außenseitig in einem im wesentlichen gleichbleibend geringen Abstand umgreift, daß der Vorsprung durch eine Rippe (6, 8, 9) gebildet wird, die sich parallel zu der Tülle (11) erstreckt und daß die Federzunge (12) und der Zapfen (11) einerseits sowie die Rippe (6, 8, 9), die Tülle (5) und das Bodenteil (3) andererseits jeweils einstückig ausgebildet sind.

2. Steckverbindung nach Anspruch 1, dadurch gekennzeichnet, daß die Federzunge (12) und der Zapfen (11) eine im wesentlichen übereinstimmende Erstreckung in axialer Richtung haben.

3. Steckverbindung nach Anspruch 1 bis 2, dadurch gekennzeichnet, daß die Federzunge (12), der Zapfen (11) und die Tülle (5) wenigstens auf den einander zugewandten Seiten durch der Steckverbindung rotationssymmetrisch zugeordnete Flächen begrenzt sind.

4. Steckverbindung nach Anspruch 3, dadurch gekennzeichnet, daß die Flächen zylindrisch ausgebildet sind.

5. Steckverbindung nach Anspruch 1 bis 4, dadurch gekennzeichnet, daß die Rippe (6, 8, 9), die Tülle (5) und das Bodenteil (3) auf der dem Gerät zugewandten Seite einstückig verbunden sind.

6. Steckverbindung nach Anspruch 1 bis 5, dadurch gekennzeichnet, daß die Rippe (6, 8, 9) der Wandung der Tülle außen- und/oder innenseitig zugeordnet ist.

7. Steckverbindung nach Anspruch 1 bis 6, dadurch gekennzeichnet, daß die Tülle (5) mit mehreren gleichmäßig auf dem Umfang verteilten Rippen (6, 8, 9) versehen ist und daß der Zapfen (11) und/oder die Federzunge (12) mit einer gleichgroßen Anzahl von gleichmäßig auf dem umfang verteilten, den Rippen entsprechend ausgebildeten Ausnehmungen (13, 14, 15) versehen ist.

8. Steckverbindung nach Anspruch 7, dadurch gekennzeichnet, daß die Tülle (5) außenseitig mit gleichmäßig verteilten Rippen (6) versehen ist, daß die Rippen in den zwischenräumen benachbarter Federzungen (12) angeordnet sind und daß die Rippen und die Federzungen eine im wesentlichen übereinstimmende Erstreckung quer zur Achse der Steckverbindung haben.

9. Steckverbindung nach Anspruch 8, dadurch gekennzeichnet, daß die Haltefläche durch die von der Mündung der Tülle (5) abgewandten Seite einer Halterippe (7) gebildet wird und daß die Halterippe sich quer zu der Richtung der Tülle (5) erstreckt.

10. Steckverbindung nach Anspruch 9, dadurch gekennzeichnet, daß mehrere, gleichmäßig auf dem Umfang der Tülle verteilte Halterippen (7) vorgesehen sind und daß die Halterippen und die Rippen (6, 8, 9) ineinander übergehend ausgebildet sind.

11. Steckverbindung nach Anspruch 1 bis 10, dadurch gekennzeichnet, daß der Zapfen (11) eine stirnseitig geöffnete Ausnehmung umschließt.

**Claims**

1. Plug-in connection for the temporary fixing of an implement on a handle, comprising a socket (5) and a spigot (11) which can be fitted into one another without looseness, there being provided, for mutual fixing when fitted together, a resilient tongue (12) on the one part, said tongue being provided with a retention claw (16) and being engageable behind a retention surface (7) on the other part, and an anti-rotation means which comprises a recess (13, 14, 15), open at the end face, on the one part, which recess can be pushed onto a radial projection on the other part without significant play in the circumferential direction, characterized in that the resilient tongue (12) is fixed at the bottom part of the spigot (11), in that the resilient tongue surrounds the outside of the wall of the socket (5) with a slight, substantially constant clearance, in that the projection is formed by a rib (6, 8, 9) which extends parallel to the socket (11) and in that on the one hand the resilient tongue (12) and the spigot (11) and on the other hand the rib (6, 8, 9), the socket (5) and the bottom part (3) are each formed in one piece.

2. Plug-in connection according to Claim 1, characterized in that the resilient tongue (12) and the spigot (11) have an essentially corresponding extension in the axial direction.

3. Plug-in connection according to Claims 1 to 2, characterized in that, at least on the mutually facing sides, the resilient tongue (12), the spigot (11) and the socket (5) are bounded by surfaces associated in rotational symmetry with the plug-in connection.

4. Plug-in connection according to Claim 3, characterized in that the surfaces are of cylindrical construction.

5. Plug-in connection according to Claims 1 to 4, characterized in that, the rib (6, 8, 9), the socket (5) and the bottom part (3) are connected in one piece on the implement side.

6. Plug-in connection according to Claims 1 to 5, characterized in that the rib (6, 8, 9) is associated with the wall of the socket on the outside and/or the inside.

7. Plug-in connection according to Claims 1 to 6, characterized in that the socket (5) is provided with a plurality of ribs (6, 8, 9) distributed uniformly over the periphery, and in that the spigot (11) and/or the resilient tongue (12) is/are provided with an equal number of recesses (13, 14, 15) distributed uniformly over the periphery and of a construction corresponding to the ribs.

8. Plug-in connection according to Claim 7, characterized in that, on the outside, the socket (5) is provided with uniformly distributed ribs (6), in that the ribs are arranged in the gaps between neighbouring resilient tongues (12), and in that the ribs and the resilient tongues have an essentially corresponding extension transverse to the axis of the plug-in connection.

9. Plug-in connection according to Claim 8, characterized in that the retention surface is formed by that side of a retention rib (7) which faces away from the opening of the socket (5), and in that the retention rib extends transversely to the direction of the socket (5).

10. Plug-in connection according to Claim 9, characterized in that a plurality of retention ribs (7) distributed uniformly on the periphery of the socket are provided, and in that the retention ribs and the ribs (6, 8, 9) are constructed such that they merge into one another.

11. Plug-in connection according to Claims 1 to 10, characterized in that the spigot (11) surrounds a recess opened at the end face.

**Revendications**

1. Assemblage à emboîtement pour la fixation amovible d'un outil sur un manche comprenant une douille (5) et une broche (11) qui peuvent être assemblées l'une dans l'autre sans ballottement, tandis que la fixation mutuelle à l'état assemblé est assurée au moyen d'une languette élastique (12) d'un des composants, pourvue d'une griffe de fixation (16), cette languette pouvant venir s'encliqueter derrière une nervure de fixation (7) de l'autre composant et une sécurité contre le pivotement, constituée d'un orifice (13, 14, 15) d'un des composants ouvert sur la face frontale et pouvant venir s'ajuster sans jeu notable en direction de la périphérie sur une saillie radiale de l'autre composant, caractérisé en ce que la languette élastique (12) est fixée à la partie inférieure de la broche (11), que la languette élastique entoure la paroi de la douille (5) extérieurement et à une faible distance essentiellement constante, que la saillie est constituée par une nervure (6, 8, 9) qui s'étend parallèlement à la douille (9) et que la languette élastique (12) et la broche (11) d'une part, ainsi que la nervure (6, 8, 9), la douille (5) et la pièce de fond (3), d'autre part, sont réalisées chacune d'une pièce.

2. Assemblage à emboîtement selon la revendication 1, caractérisé en ce que la languette élastique (12) et la broche (11) présentent, en direction axiale, des extensions qui sont essentiellement en correspondance.

3. Assemblage à emboîtement selon les revendications 1 et 2, caractérisé en ce que la languette élastique (12), la broche (11) et la douille (5) sont limitées, au moins sur leurs faces tournées l'une vers l'autre, par des surfaces présentant une symétrie de rotation par rapport à l'assemblage à emboîtement.

4. Assemblage à emboîtement selon la revendication 3, caractérisé en ce que les surfaces ont une forme cylindrique.

5. Assemblage à emboîtement selon les revendications 1 à 4, caractérisé en ce que les nervures (6, 8, 9), la douille (5) et la partie de fond (3) sont assemblées d'une pièce sur la face tournée vers l'outil.

6. Assemblage à emboîtement selon les revendications 1 à 5, caractérisé en ce que la nervure (6, 8, 9) est disposée à l'intérieur et/ou à l'extérieur de la paroi de la douille.

7. Assemblage à emboîtement selon les revendications 1 à 6, caractérisé en ce que la douille (5) est pourvue de plusieurs nervures (6, 8, 9) réparties uniformément sur la périphérie et que la broche (11) et/ou la languette élastique (12) sont pourvues d'un nombre égal de cavités (13, 14, 15) réparties uniformément sur la périphérie et disposées en correspondance avec les nervures.

8. Assemblage à emboîtement selon la revendication 7, caractérisé en ce que la douille (5) est pourvue extérieurement de nervures (6) réparties uniformément, que les nervures sont disposées dans les intervalles entre les languettes élastiques voisines (12) et que les nervures et les languettes élastiques présentent une extension essentiellement en correspondance, transversalement par rapport à l'axe de l'assemblage à emboîtement.

9. Assemblage à emboîtement selon la revendication 8, caractérisé en ce que la surface de maintien est constituée par la face d'une nervure de fixation (7) opposée à la paroi de la douille (5) et que la nervure de fixation s'étend transversalement par rapport à la direction de la douille (5).

10. Assemblage à emboîtement selon la revendication 9, caractérisé en ce que plusieurs nervures de fixation (7), réparties uniformément sur la périphérie de la douille, sont prévues et que les nervures de fixation et les nervures (6, 8, 9) sont réalisées de façon a se continuer les unes les autres.

11. Assemblage à emboîtement selon les revendications 1 à 10, caractérisé en ce que la broche (11) entoure un orifice ouvert sur la face frontale.

FIG.1

FIG.3

FIG.2

FIG.5

EP 0 202 362 B1

FIG.4

FIG.7

FIG.6

2